# FASCICULE DE BREVET EUROPEEN

(11) **EP 2 858 753 B1**
(45) Date de publication et mention de la délivrance du brevet: **03.07.2019**
(21) Numéro de dépôt: 13727927.9
(22) Date de dépôt: 11.06.2013
(51) Int. Cl.: B01L 3/00, B01D 21/26

(54) **DISPOSITIF DE FRACTIONNEMENT D'UN FLUIDE COMPORTANT DES PARTICULES ET D'EXTRACTION D'UN VOLUME D'INTERÊT**
VORRICHTUNG ZUR FRAKTIONIERUNG VON FLUIDHALTIGEN PARTIKELN UND ZUR EXTRAKTION EINES VOLUMENS VON INTERESSE
DEVICE FOR THE FRACTIONATION OF A FLUID CONTAINING PARTICLES AND FOR THE EXTRACTION OF A VOLUME OF INTEREST

(30) Priorité: 11.06.2012 FR 1255437
(43) Date de publication de la demande: 15.04.2015
(73) Titulaire: Commissariat à l'Énergie Atomique et aux Énergies Alternatives, 75015 Paris (FR); Centre National de la Recherche Scientifique, 75794 Paris Cedex 16 (FR)
(72) Inventeur: MARCHALOT, Julien, F-69100 Villeurbanne (FR); ACHARD, Jean-Luc, F-38100 Grenoble (FR); FOUILLET, Yves, F-38340 Voreppe (FR)
(74) Mandataire: Brevalex
(86) Numéro de dépôt international: PCT/EP2013/062043
(87) Numéro de publication internationale: WO 2013/186218

(56) Documents cités:
- EP-A1- 2 119 504
- WO-A1-90/02839
- GB-A- 2 392 854
- US-A- 4 318 803
- FAIVRE MAGALIE ET AL: "Geometrical focusing of cells in a microfluidic device: an approach to separate blood plasma", BIORHEOLOGY, ELSEVIER SCIENCE LTD., OXFORD, GB, vol. 43, no. 2, 12 janvier 2006 (2006-01-12), pages 147-1595, XP008097626, ISSN: 0006-355X

## Description

### DOMAINE TECHNIQUE

L'invention se rapporte au domaine de la micro-fluidique et concerne un dispositif de fractionnement et d'extraction d'un volume d'intérêt d'un fluide comportant des particules.

### ÉTAT DE LA TECHNIQUE ANTÉRIEURE

De façon générale, lorsque l'on souhaite analyser un échantillon de fluide contenant des particules, il est nécessaire de fractionner préalablement ce fluide pour séparer un volume fluidique enrichi en particules d'un volume fluidique appauvri en particules afin de ne prendre en compte que le volume fluidique d'intérêt. Dans le cas d'une analyse sanguine notamment, il est nécessaire de séparer les échantillons de sang pour séparer les cellules sanguines (particules) du plasma/sérum afin d'effectuer des analyses sur le plasma, par exemple : des tests de coagulations, dépistages, analyse de composition sanguine.

Par volume fluidique enrichi en particules, on entend un premier volume fluidique dont la concentration en particules est supérieure à la concentration moyenne en particules du volume total du fluide comportant des particules et par volume fluidique appauvri en particules, on entend un second volume fluidique dont la concentration en particules est inférieure à la concentration moyenne en particules du volume total dudit fluide.

L'étape de fractionnement est généralement effectuée par des techniques de centrifugation ou de filtration. Les étapes de fractionnement et d'analyse sont principalement effectuées dans des laboratoires spécialisés nécessitant un personnel qualifié et des systèmes adaptés. Pour effectuer une analyse sanguine par exemple, il est nécessaire de centrifuger les échantillons de sang dans un laboratoire pour séparer les cellules sanguines (globules rouges) du plasma/sérum.

Le fait que ces étapes soient effectuées dans un laboratoire présente plusieurs contraintes : un temps d'attente entre les deux étapes pendant lequel un échantillon sensible peut se dégrader, la disponibilité des équipements et du personnel du laboratoire, le coût, la difficile reproductibilité et homogénéité du processus global de fractionnement et d'analyse de l'échantillon.

Une avancée a été trouvée grâce à la miniaturisation des microsystèmes d'analyse (aussi appelés laboratoires sur puce (« Lab on chip ») qui permettent de disposer aisément et rapidement d'un système d'analyse et donc de relâcher en partie les contraintes exposées supra. On parlera alors de microsystèmes comprenant des moyens d'analyse. Une étape de fractionnement est cependant toujours nécessaire pour pouvoir utiliser ce type de laboratoires sur puce. Dès lors, le recours aux services d'un laboratoire reste nécessaire pour fractionner un volume important de fluide (quelques mL).

Afin d'éliminer la nécessité de l'étape de fractionnement effectuée en dehors du microsystème d'analyse, des études récentes ont abouti au développement de nombreuses techniques permettant de créer des microsystèmes d'analyse et de fractionnement regroupés sur la même puce. On parlera alors de microsystèmes comprenant des moyens d'analyse et de fractionnement. De tels microsystèmes éliminent les contraintes exposées supra.

Les techniques de fractionnement développées se répartissent en deux catégories :
- les techniques de fluidiques passives qui utilisent principalement la ségrégation par taille. On qualifie ces techniques de passives car l'unique moteur de la séparation est l'écoulement du fluide ;
- les techniques de fluidiques actives : elles combinent la fluidique avec l'utilisation d'une force physique qui tire profit des propriétés physiques intrinsèques et
- spécifiques des cellules telles que la densité, les caractéristiques diélectriques, ou encore le comportement magnétique.

Ces techniques sont notamment exposées dans les articles scientifiques suivants : PAMME, N. (2007) "Continuousflow separations in microfluidic devices", Lab on a Chip, 7 1644-4659" ; TSUTSUI, H And HO, C.M (2009) "Cell speration by non inertial force fields in microfluidic systems", Mechanics Research Communications, 36, 92-103.

Cependant, ces techniques ne permettent que de fractionner des volumes d'échantillons fortement dilués, injectés à des débits très faibles et à des volumes peu importants (typiquement de l'ordre de quelques dizaines de µL). Les moyens d'analyse, bien que très performants, des microsystèmes comprenant des moyens d'analyse et de fractionnement sont donc limités par le volume d'échantillon fractionné disponible.

Afin d'illustrer cette limitation intrinsèque aux microsystèmes comprenant des moyens d'analyse et de fractionnement, on notera que le seuil de sensibilité actuel pour un test de détection du virus du sida par PCR quantitative est de 20 pathogènes pour un prélèvement de 2 ml. On comprend alors qu'un fractionnement sur un volume de quelques dizaines de µL est insuffisant pour que les moyens d'analyses du microsystème comprenant des moyens d'analyse et de fractionnement, aussi performants qu'ils soient, fournissent des résultats significatifs.

D'autres techniques de fractionnement sont décrites dans les documents US 4 318 303 A, EP 2 119 504 A1, et WO 90/02839 A1. En particulier le document EP 2 119 504 A1 divulgue un dispositif d'extraction du plasma sanguin par une exploitation des recirculations couplées à une zone appauvrie dans un système microfluidique, une zone de recirculation pouvant être provoquée par un obstacle non profilé placé dans la lumière d'une conduite. Le document WO 90/02839 A1 concerne un dispositif pour la séparation de particules dans un liquide destiné à être utilisé pour l'épuration de suspensions fibreuses dans l'industrie papetière.

Par conséquent, les techniques actives ou passives de fractionnement développées sont inadaptées aux cas où l'analyte est rare, ce qui est fréquent dans l'analyse de fluides biologiques.

L'objectif de l'invention est alors de pouvoir fractionner par des techniques de fluidique passive, et sans passer par un laboratoire, un volume important de fluide comportant des particules en un premier volume d'intérêt appauvri en particules et en un second volume d'intérêt enrichi en particules.

L'invention propose aussi un dispositif apte à fractionner un fluide comprenant des particules et à extraire un volume d'intérêt dépourvu de particules qui servira d'échantillon pour un microsystème du type comprenant des moyens d'analyse.

### EXPOSÉ DE L'INVENTION

La présente invention est définie par un dispositif de fractionnement, milli-système, d'un fluide de type échantillon de sang, comportant des particules de type globules de sang, et d'extraction d'un volume appauvri en particules et d'un volume enrichi en particules, comportant :
- un réservoir cylindrique muni à une première extrémité d'un orifice d'admission destiné à alimenter le réservoir en fluide dans un sens de pompage allant de ladite première extrémité à une seconde extrémité du réservoir ;
- un corps de fractionnement, s'étendant le long d'un axe central dudit réservoir dans lequel il est logé, entre une extrémité amont et une extrémité aval, ladite extrémité amont du corps de fractionnement étant disposée au surplomb dudit orifice d'admission, une section dudit corps de fractionnement se réduisant brusquement à une hauteur inférieure au dixième de sa hauteur au niveau de son extrémité aval pour former une base plane ;
- le corps de fractionnement définissant avec ledit réservoir, un premier canal formant une zone de restriction de l'écoulement du fluide et débouchant au niveau de ladite base plane sur une zone de singularité géométrique, c'est-à-dire, un élargissement brusque de la section dans laquelle le fluide peut transiter en aval de la base plane, ladite zone de singularité géométrique formant une zone de recirculation du fluide ; et
- des moyens d'extraction, situés en aval dudit corps de fractionnement, destinés à séparer et à extraire ledit volume appauvri et ledit volume enrichi, lesdits moyens d'extraction comportant une cloison, par exemple annulaire, délimitant un volume d'extraction destiné à recevoir lors d'une circulation du fluide dans le sens de pompage, une phase appauvrie en particules formée dans ladite zone de recirculation au niveau de ladite cloison.

La cloison est disposée en aval du corps de fractionnement, de telle sorte que le liquide enrichi s'écoule à l'extérieur de cette cloison, c'est-à-dire entre cette dernière et la paroi interne du réservoir, tandis que le liquide appauvri peut s'écouler à l'intérieur de cette cloison, c'est-à-dire dans l'espace délimité par ladite cloison.

Selon l'invention, la section du corps de fractionnement se réduit brusquement au niveau de son extrémité aval. Par brusquement, on entend que la section de ce corps se réduit, pour devenir nulle ou négligeable, cette réduction se produisant selon une hauteur nulle ou faible, selon l'invention inférieure au dixième de la hauteur totale du corps, cette dernière étant déterminée selon un axe parallèle au sens d'écoulement du fluide le long du corps de fractionnement. Autrement dit, la hauteur totale du corps est la distance entre ses extrémités amont et avale.

D'une façon générale, l'extrémité aval du corps de fractionnement forme le débouché du premier canal, ce qui permet la formation de zones de recirculation au niveau de cette base lorsque le fluide s'écoule de l'amont vers l'aval, vers les moyens d'extraction.

La formation de telles zones permet de séparer le liquide en :
- une partie enrichie du liquide, s'écoulant vers un moyen d'extraction du volume enrichi, à l'extérieur de la cloison ;
   et
- une partie appauvrie du liquide, s'écoulant vers un moyen d'extraction du liquide appauvri, à l'intérieur de la cloison.

Avantageusement, la section du corps se réduit selon une hauteur nulle, le corps de fractionnement comporte alors une base, plane ou sensiblement plane formant son extrémité aval.

De préférence, la section du corps de fractionnement s'accroît entre son extrémité amont et son extrémité aval.

Avantageusement, le corps de fractionnement est de forme axisymétrique, et encore avantageusement sensiblement paraboloïdale. Cela limite les turbulences dans le premier canal qui est alors annulaire, et permet une première séparation entre une phase enrichie et une phase appauvrie du liquide dans le premier canal, en amont du débouché.

De préférence, la section du corps de fractionnement a une forme d'ogive tronquée. Plus précisément, sa section est sensiblement croissante entre son extrémité amont et une zone intermédiaire, située en amont de l'extrémité aval. Elle est sensiblement constante entre la zone intermédiaire et l'extrémité aval. Cela permet de générer un écoulement laminaire dans le premier canal annulaire.

Dans un premier mode de réalisation de l'invention, les moyens d'extraction sont fixes et sont insérés en partie dans le réservoir dans un évidement réalisé dans la base du corps de fractionnement.

Dans un second mode de réalisation de l'invention, les moyens d'extraction sont amovibles et destinés à être insérés en partie dans le réservoir dans un évidement réalisé dans la base du corps de fractionnement.

De préférence, ladite cloison comporte une pluralité d'orifices traversant pratiqués au niveau de ladite zone de recirculation, lesdits orifices définissant un diamètre inférieur au diamètre moyen des particules pour agir en tant que filtres desdites particules, pour l'extraction dudit volume appauvri dans ledit volume d'extraction.

Les moyens d'extraction peuvent avantageusement agir en tant que moyen de pompage du fluide, ce dernier s'écoulant alors, d'une extrémité amont à une extrémité aval du corps de fractionnement. Ainsi, ces moyens d'extraction agissent à la fois en tant que moyen d'admission du fluide dans le réservoir et comme moyens d'extraction du fluide enrichi et du fluide appauvri.

Avantageusement, lesdits moyens d'extraction comprennent de préférence un premier piston se déplaçant entre la paroi interne dudit réservoir et ladite cloison, pour récupérer ledit volume enrichi, et un second piston se déplaçant dans un espace délimité par ladite cloison, pour récupérer ledit volume appauvri, lesdits premier et deuxième pistons se déplaçant à partir d'une position initiale dans un sens allant de ladite première extrémité à une seconde extrémité dudit réservoir, dit sens de pompage ou sens d'écoulement, pour créer des tourbillons dans ladite zone de recirculation située au débouché dudit premier canal.

Cela permet d'aspirer le liquide dans le dispositif, tout en permettant l'extraction du volume enrichi et du volume appauvri. Ces premier et deuxième pistons peuvent être solidaires.

Selon une première variante, les premier et deuxième pistons sont réalisés selon une même pièce.

Selon une seconde variante, le déplacement dudit second piston est solidaire de celui dudit premier piston dans un sens allant de la première extrémité à la seconde extrémité dudit réservoir, ledit second piston pouvant être désolidarisé dudit premier piston et déplacé indépendamment dudit premier piston dans un sens allant de ladite seconde extrémité à ladite première extrémité dudit réservoir afin d'expulser un éventuel volume enrichi résiduel présent dans le réservoir. On limite alors le risque de colmatage des ouvertures éventuelles pratiquées dans la cloison.

Avantageusement, le second piston peut comprendre un soufflet à son extrémité. Cela permet de limiter une éventuelle adhérence entre ce piston et le corps de fractionnement lorsque cette extrémité est placée au contact du corps de fractionnement.

Avantageusement, le premier piston comprend une collerette disposée le long de ladite cloison, ladite collerette étant apte à libérer successivement lesdits orifices en fonction de la course dudit premier piston dans une direction allant de ladite première extrémité à ladite seconde extrémité dudit réservoir.

Dans un mode de réalisation avantageux du corps de fractionnement, celui-ci est muni d'une pluralité d'ailettes fixées sur sa surface, entre son extrémité amont et son extrémité aval, chaque ailette s'étendant entre la surface du corps de fractionnement et la paroi interne du réservoir, de telle sorte que l'espace séparant ladite paroi interne du réservoir et le corps de fractionnement soit divisé en une pluralité de seconds canaux, chaque second canal étant délimité par deux ailettes adjacentes.

De préférence, deux ailettes adjacentes délimitant un second canal forment un angle aigu entre elles.

Ainsi, les particules s'écoulant dans un second canal sont repoussées dudit angle aigu, de telle sorte qu'elles se concentrent à distance de cet angle, à proximité de la paroi interne. Cela permet d'obtenir une concentration de particules à l'opposé d'une zone où l'écartement entre les ailettes est minimal au fur et à mesure de l'écoulement dudit fluide dans le second canal. Ainsi, on obtient une première séparation entre une phase appauvrie du fluide et une phase enrichie du fluide dans le canal délimitant le corps de fractionnement, en amont des zones de formation des recirculations.

Selon un mode de réalisation la section d'un second canal, c'est-à-dire la section transversale à la direction d'écoulement dudit fluide, dite section droite, est de forme triangulaire.

Selon un mode de réalisation, l'épaisseur des ailettes est croissante de ladite extrémité amont à ladite extrémité aval du corps de fractionnement et/ou l'angle aigu formé par lesdites ailettes formant un second canal est décroissant de ladite extrémité amont à ladite extrémité aval.

Selon un mode de réalisation, chaque second canal est vrillé par rapport à un axe parallèle à la direction d'écoulement dudit fluide.

Le dispositif selon l'invention peut être utilisé pour fractionner un échantillon de sang entre un volume de plasma appauvri en globules, par exemple des globules rouges et un volume de sang enrichi en globules, par exemple des globules rouges et pour récupérer ledit volume de plasma.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
la figure 1 illustre de manière schématique le dispositif de fractionnement et d'extraction selon l'invention ;
la figure 2 illustre de manière schématique le dispositif selon l'invention dans un premier mode de réalisation des moyens d'extraction ;
la figure 3 illustre de manière schématique le dispositif selon l'invention dans un second mode de réalisation des moyens d'extraction ;
la figure 4 illustre de manière schématique le dispositif selon l'invention dans une première variante de réalisation des moyens d'extraction ;
la figure 5 illustre de manière schématique le dispositif selon l'invention dans une seconde variante de réalisation des moyens d'extraction ;
la figure 6 illustre de manière schématique la mise en oeuvre d'une collerette sur la cloison des moyens d'extraction, selon l'invention ;
la figure 7 illustre de manière schématique le principe de collecte du volume d'extraction dans le second mode de réalisation des moyens d'extraction selon l'invention ;
la figure 8 illustre de manière schématique un canal de fractionnement selon l'invention ;
la figure 9 est une vue schématique en coupe transversale à la direction d'écoulement du fluide de la section d'un canal de fractionnement réalisé selon un premier mode de réalisation des canaux de fractionnement selon l'invention ;
la figure 10 est une vue schématique en coupe transversale à la direction d'écoulement du fluide de la section d'un canal de fractionnement réalisé selon un troisième mode de réalisation ;
la figure 11A illustre une vue en coupe transversale du corps de fractionnement lorsque les canaux de fractionnement sont réalisés selon le premier et un deuxième modes de réalisation des canaux de fractionnement selon l'invention ;
La figure 11B illustre une vue en relief du corps de fractionnement lorsque les canaux de fractionnement sont réalisés selon le premier et le deuxième mode de réalisation des canaux de fractionnement selon l'invention ;
la figure 12 illustre une vue en relief du corps de fractionnement 25 lorsque les canaux de fractionnement sont réalisés selon le troisième mode de réalisation des canaux de fractionnement selon l'invention ; et
la figure 13 illustre le processus de fractionnement d'un fluide comportant des particules, et d'extraction d'un premier volume fluidique d'intérêt, appauvri en particules, grâce au dispositif de fractionnement et d'extraction selon l'invention.

### EXPOSÉ DÉTAILLÉ DE MODES DE RÉALISATION PARTICULIERS

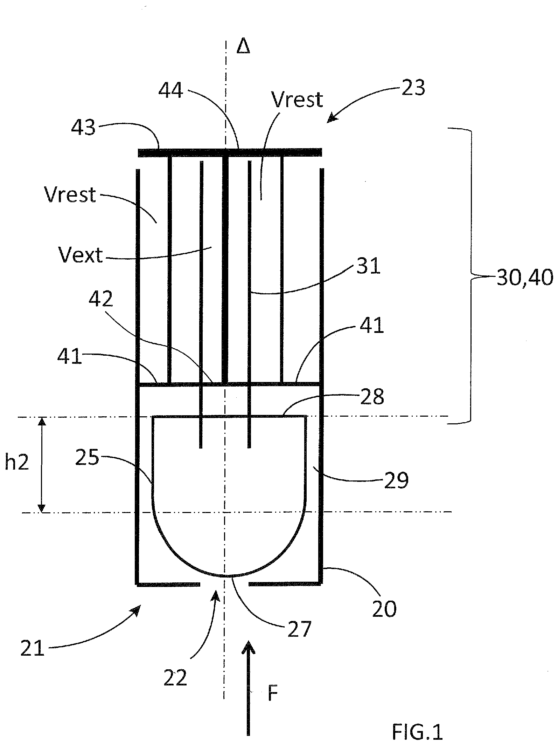

La figure 1 illustre la conception selon l'invention, d'un dispositif de fractionnement, d'un fluide F contenant des particules, et d'extraction d'un premier volume fluidique d'intérêt, appauvri en particules et d'un second volume fluidique d'intérêt, riche en particules.

Plus précisément, le dispositif selon l'invention comprend un réservoir 20 cylindrique, donc de géométrie axisymétrique, muni à sa première extrémité 21 d'un orifice d'admission 22 destiné à alimenter le réservoir en fluide F comprenant des particules lorsque des moyens d'admission du fluide, tels des moyens de pompage, sont actionnés.

Par axisymétrique, on entend que la forme du réservoir 20 est symétrique par révolution autour d'un axe central Δ. L'écoulement d'un fluide dans le réservoir a alors des propriétés axisymétriques.

Le réservoir 20 est par exemple un tube de rapport d'aspect 1 sur 5, la plus longue dimension du réservoir 20 étant suivant son axe central Δ. Le réservoir peut être par exemple une seringue de longueur comprise entre 5 cm et 10 cm, de diamètre de l'ordre de 1 cm à 3 cm et dont l'orifice d'admission à un diamètre de l'ordre de 0.1 mm à 0.5 mm.

Le volume du réservoir 20 est de l'ordre de quelques millilitres à quelques dizaines de millilitres, ce qui permet de traiter des volumes importants de fluide. Le dispositif de fractionnement et d'extraction selon l'invention est un milli-système.

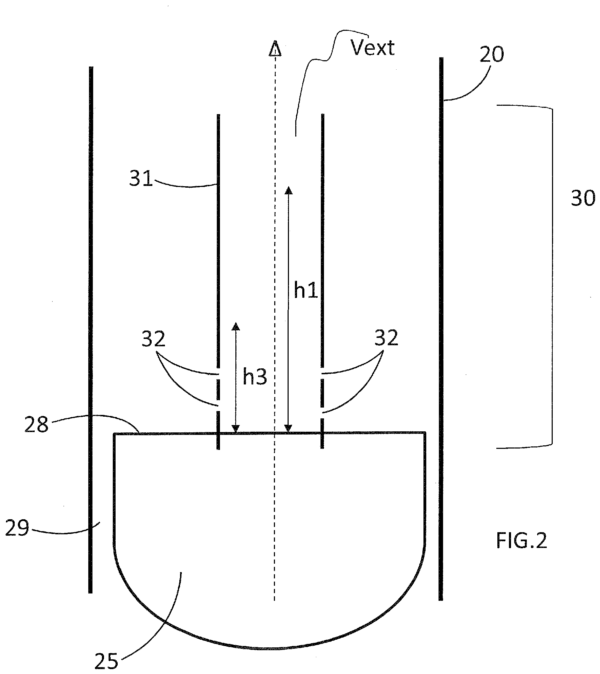

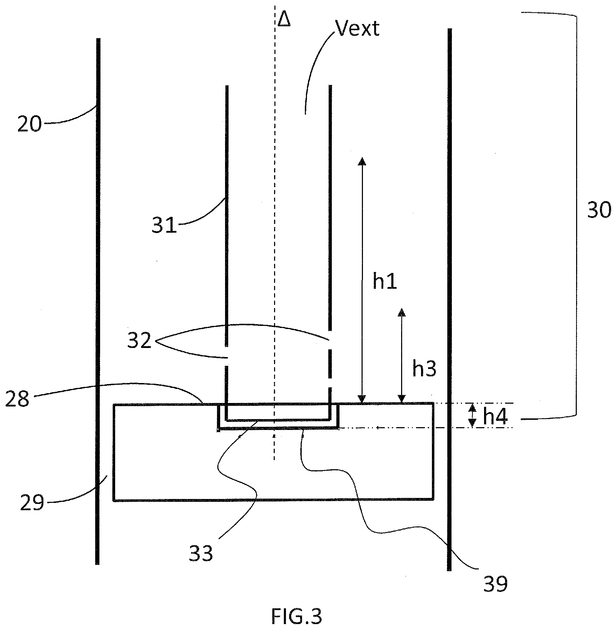

Selon l'invention, le réservoir 20 comprend un corps de fractionnement 25 placé par conséquent en aval de l'orifice d'admission 22, et des moyens d'extraction 30, 40 (voir figures 2,3).

Le corps de fractionnement 25 inséré dans le réservoir permet de créer une zone de restriction de l'écoulement annulaire dans le cas où un fluide F comportant des particules est pompé au travers de l'orifice d'admission 22 grâce à des moyens de pompage, et circule en régime permanent dans le réservoir, dans un sens allant d'une première extrémité 21 du réservoir 20 à une seconde extrémité 23 du réservoir.

Par convention, dans la suite de la description on appellera sens de pompage le sens allant d'une première extrémité 21 du réservoir 20 à une seconde extrémité 23 du réservoir, et sens de chasse le sens allant de la seconde extrémité 23 du réservoir à la première extrémité 21 du réservoir.

Les moyens de pompages qui peuvent être utilisés pour alimenter le réservoir 20 en fluide F, sont des moyens de pompages traditionnels, comme des micro-pompes électriques. Ces moyens, bien connus de l'homme du métier, ne seront pas décrits en détail dans la présente description.

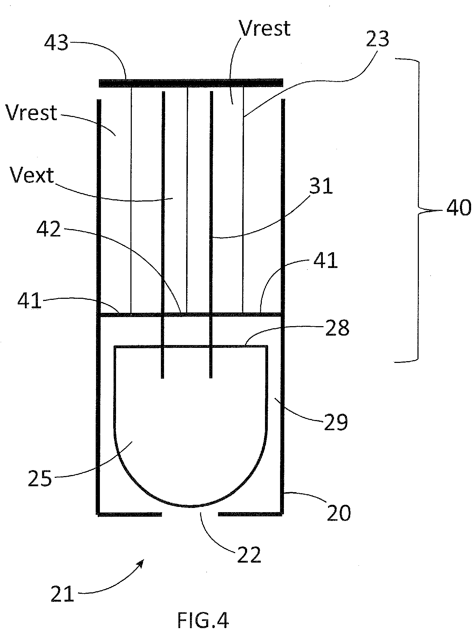

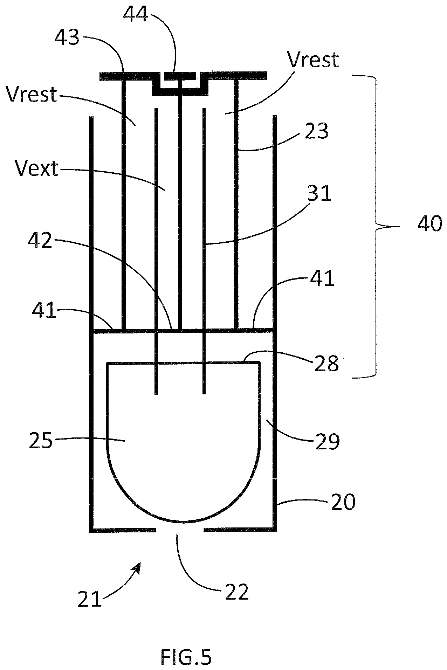

En revanche, dans des variantes particulières de réalisation du dispositif selon l'invention qui seront décrite plus loin dans la description (voir figures 4 et 5), les moyens d'extraction 40 peuvent avantageusement agir en tant que moyens de pompage du fluide F, conférant de ce fait un caractère compact au dispositif de fractionnement et d'extraction selon l'invention.

Le corps de fractionnement 25 s'étend le long de l'axe central Δ entre une extrémité amont 27 et une extrémité aval, et est placé au débouché de l'orifice d'admission 22. L'extrémité amont 27 du corps de fractionnement est disposée au niveau de l'orifice d'admission 22.

De préférence, l'orifice d'admission 22 est disposé à la première extrémité du réservoir de telle sorte que son centre se situe sur l'axe central Δ du réservoir et l'extrémité amont 27 du corps de fractionnement est disposée au surplomb de l'orifice d'admission 22.

L'espace situé entre la paroi interne du réservoir et le corps de fractionnement 25 forme un canal 29 qui s'étend selon l'axe de symétrie Δ et qui débouche au niveau de l'extrémité aval du corps de fractionnement pour former une zone de recirculation.

Le corps de fractionnement 25 est de préférence un corps plein, de façon à ce que tout le fluide introduit dans l'orifice d'admission 22 s'écoule dans le canal annulaire, le long du corps de fractionnement, jusqu'à son extrémité aval.

Selon l'invention, la section du corps de fractionnement 25 se réduit brusquement au niveau de son extrémité aval.

Par brusquement, on entend que la section de ce corps se réduit, pour devenir nulle ou négligeable. Cette réduction se produit selon une hauteur nulle ou faible, selon l'invention inférieure au dixième de la hauteur totale du corps de fractionnement 25, prise entre ses extrémités amont et aval.

Au débouché de la zone de restriction, c'est-à-dire au débouché du canal 29, la section dans laquelle peut transiter un fluide s'élargit brusquement. Le réservoir 20 dans lequel est logé le corps de fractionnement 25 présente donc une zone de singularité géométrique propice à générer un phénomène de recirculation.

Dans le cas où un fluide F comportant des particules circule, en régime permanent et dans le sens de pompage, dans le réservoir 20 dans lequel est logé le corps de fractionnement 25 selon l'invention, le phénomène se traduit par l'apparition de tourbillons dits de culots emprisonnés dans la zone de recirculation, au débouché du canal 29, là où la section s'élargit brusquement.

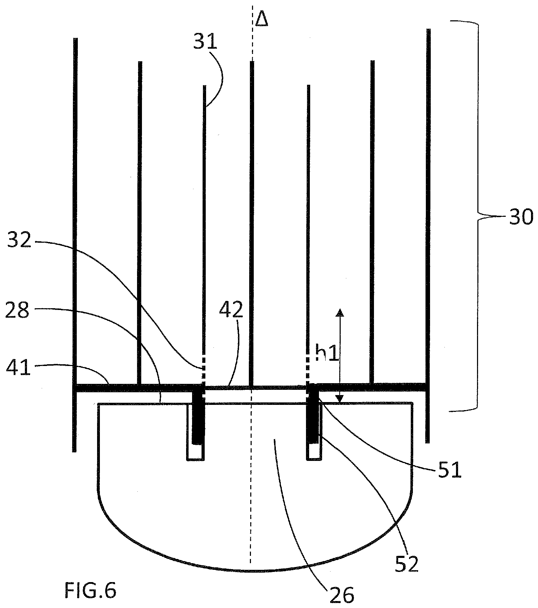

Dans le mode de réalisation préférentiel de l'invention qui est décrit et illustré dans les figures 1 à 13, la section du corps se réduit selon une hauteur nulle. Le corps de fractionnement comporte alors une base 28, plane ou sensiblement plane formant son extrémité aval. La base plane 28 du corps de fractionnement 25 est formée par la section droite de son extrémité aval.

Dans ce cas, le corps de fractionnement 25 présente une forme telle qu'une surface de la section droite à son extrémité amont 27, dite section amont, soit inférieure ou égale à la surface de sa base 28.

La surface de la base plane 28 est la surface maximale tandis que la surface de la section amont est la surface minimale, ces deux surfaces pouvant être égales.

Avantageusement, le corps de fractionnement est de forme axisymétrique afin de limiter les turbulences dans le canal 29 qui est alors annulaire, et de permettre une première séparation entre une phase enrichie et une phase appauvrie du fluide F au débouché du canal annulaire 29.

Dans la suite de la description, on considère que le corps de fractionnement 25 est de forme axisymétrique.

Le corps de fractionnement 25 logé dans le réservoir 20 est supporté et maintenu en position par exemple, par des moyens de maintien connus de l'homme du métier et qui ne seront pas décrits ici plus en détails.

La figure 2 et la figure 3 illustrent de manière schématique le dispositif selon l'invention selon différents modes de réalisation, avec un élargissement de la vue centré sur la base 28 du corps de fractionnement 25. La suite de la description va maintenant être décrite en relation avec les figures 1 à 3.

La zone de recirculation est définie comme étant l'espace allant de l'extrémité aval 28 du corps de fractionnement 25 jusqu'à une hauteur notée h1. La hauteur h1 est la hauteur de sillage du corps de fractionnement au-delà de laquelle le phénomène de recirculation s'estompe. Autrement dit, au-delà de la hauteur h1, le volume fluidique appauvri en particules se re-mélange au volume fluidique enrichi en particules.

Dans les tourbillons de culot qui se créent dans la zone de recirculation, les particules tendent à être éjectées par une force centrifuge selon leur densité.

Plus particulièrement, chaque particule est soumise à deux forces antagonistes : une force centrifuge qui tend à l'éloigner du centre du tourbillon et une force de portance qui l'éloigne de la paroi interne du réservoir 20. Pour une particule dont la masse est suffisamment importante, la force centrifuge prédomine sur la force de portance, laissant ainsi une zone appauvrie en particules au centre du tourbillon et auprès de la paroi interne du réservoir 20.

Dans le cas du sang, la masse volumique importante et le volume moyen des globules rouges et des globules blancs fait que ceux-ci sont éjectés hors du tourbillon.

Afin d'optimiser le phénomène de recirculation et donc la séparation des particules, la section du corps de fractionnement 25 est croissante entre son extrémité amont 27 et son extrémité aval 28. En effet, une telle décroissance permet de limiter les turbulences à l'entrée du canal 29, au niveau de l'extrémité amont 27 du corps de fractionnement 25 et donc de favoriser les phénomènes de répartition des particules à l'intérieur du canal annulaire 29 en fonction de leur masse, comme cela est connu de l'homme du métier.

Ainsi, le corps de fractionnement 25 a une forme axisymétrique paraboloïdale ou préférentiellement une forme d'ogive tronquée afin de générer un écoulement laminaire dans le canal annulaire. Par ogive tronquée, on entend que le corps de fractionnement a une section droite sensiblement constante sur une hauteur comprise entre son extrémité aval 28 et une section droite d'une zone intermédiaire située à une hauteur h2 définie à partir de son extrémité aval et sensiblement croissante entre son extrémité amont 27 et la zone intermédiaire.

La hauteur h2 est dans le cas du sang, de l'ordre de 1 à 50 mm de sorte que le profil de distribution des globules dans le canal annulaire 29 soit homogène et stabilisé. Un tel profil de distribution dans un canal est par exemple décrit dans la demande de brevet publiée FR 2 931079.

De préférence, la hauteur du corps de fractionnement entre son sommet 27 et sa base 28 est comprise entre 1/4 et 1/10 de la hauteur du réservoir 20 et l'espace entre la base 28 et la paroi interne du réservoir est compris entre quelques dizaines de µm à quelques centaines de µm en fonction de la taille des particules contenues dans le fluide à fractionner.

Dans le cas où le fluide F à fractionner est du sang, l'espace entre la surface externe du corps de fractionnement 25 au niveau de sa base 28 et la paroi interne du réservoir est alors compris entre 50 µm et 1 mm.

Sous l'action d'un pompage du fluide F comportant des particules dans le réservoir dans le sens de pompage, les moyens d'extraction 30, 40 qui sont situés en aval du corps de fractionnement 25, permettent d'extraire le volume appauvri et le volume enrichi et de récupérer la phase appauvrie en particules. Dans ce but, les moyens d'extraction 30, 40 comportent une cloison 31 délimitant un volume d'extraction *Vₑₓₜ.* Cette cloison s'appuie sur la base 28 lorsque l'on souhaite remplir au moins une partie du volume fluidique *Vₑₓₜ* par un volume fluidique d'intérêt appauvri en particules.

Au débouché du corps de fractionnement 25 et dans le cas où un fluide F comportant des particules est pompé au travers de l'orifice d'admission 22 et circule en régime permanent dans le sens de pompage dans le réservoir, les particules prises dans les tourbillons sont soumises à la fois à la force centrifuge qui tend à les éloigner du centre du tourbillon et à une force de portance qui les éloigne de la paroi interne du réservoir 20 et de la paroi externe de la cloison 31 des moyens d'extraction 30, 40. Dans la zone de recirculation, il existe donc une zone appauvrie en particules au centre de chaque tourbillon et auprès de la paroi interne du réservoir mais aussi de la cloison 31. Il est alors possible de récupérer la phase appauvrie en particules au niveau de la cloison 31 située dans le sillage du corps de fractionnement 25.

Avantageusement, la cloison 31 est annulaire (cylindrique) et donc de géométrie axisymétrique. La cloison 31 a de préférence un axe de symétrie qui est confondu avec l'axe central Δ du réservoir afin de permettre une répartition homogène des tourbillons autour de celle-ci et donc d'optimiser l'extraction du volume fluidique appauvri en particules.

Dans l'exemple de l'invention décrit dans la présente description, les moyens d'extractions 30, 40 peuvent être réalisés selon deux modes de réalisations différents.

La suite de la description va maintenant être décrite en relation avec la figure 1 et les figures 2 à 3.

Les figures 2 et 3 illustrent le dispositif selon l'invention, selon un premier et un second mode de réalisation des moyens d'extraction 30, 40 respectivement.

Dans un premier mode de réalisation des moyens d'extraction 30 illustré en figure 2, la cloison 31 est fixée de manière inamovible dans le corps de fractionnement 25 au niveau de la base 28. Dans ce cas, le corps de fractionnement obture une extrémité de la cloison. Ainsi, la cloison 31 délimite bien un volume d'extraction *Vₑₓₜ.*

Afin de faire pénétrer la phase appauvrie en particules dans le volume d'extraction *Vₑₓₜ,* la cloison 31 est percée d'une pluralité d'orifices 32 traversant. Ces orifices sont pratiqués de l'extrémité aval 28 du corps de fractionnement 25 jusqu'à une hauteur d'extraction, notée h3, inférieure à la hauteur h1 de la zone de recirculation afin de garantir une efficacité maximale. En effet, le phénomène de recirculation tend à s'atténuer à mesure que l'on s'éloigne de la base 28.

Dans le second mode de réalisation des moyens d'extraction 30 illustré en figure 3, la cloison est obturée de manière étanche à sa première extrémité 33 qui est la plus proche de l'extrémité aval 28 du corps de fractionnement 25. La cloison 31 ainsi obturée délimite bien un volume d'extraction *Vₑₓₜ.*

Dans ce cas, les moyens d'extraction 30 sont alors prévus pour être insérés sans jeu, par la première extrémité 33 de la cloison 31, dans un évidement 39 de préférence cylindrique ayant pour centre l'axe de symétrie Δ du corps de fractionnement 25 et de hauteur h4 qui est pratiqué au niveau de la base 28 du corps de fractionnement. La hauteur h4 et le rayon de l'évidement 39 sont choisis de telle sorte que la cloison, lorsqu'elle est insérée en partie dans l'évidement 39, ait un axe de symétrie confondu avec l'axe Δ.

La cloison 31 comporte alors une pluralité d'orifices 32 traversant situés au niveau de la zone de recirculation pour faire pénétrer le volume d'intérêt appauvri en particules dans le volume d'extraction *Vₑₓₜ.* Les orifices 32 sont pratiqués sur la cloison 31 jusqu'à la hauteur d'extraction h3 et sont percés de sorte que lorsque la cloison est insérée dans l'évidement 39, la hauteur entre les premiers orifices 32 et la première extrémité 33 de la cloison est supérieure à la hauteur h4 de l'évidement 39.

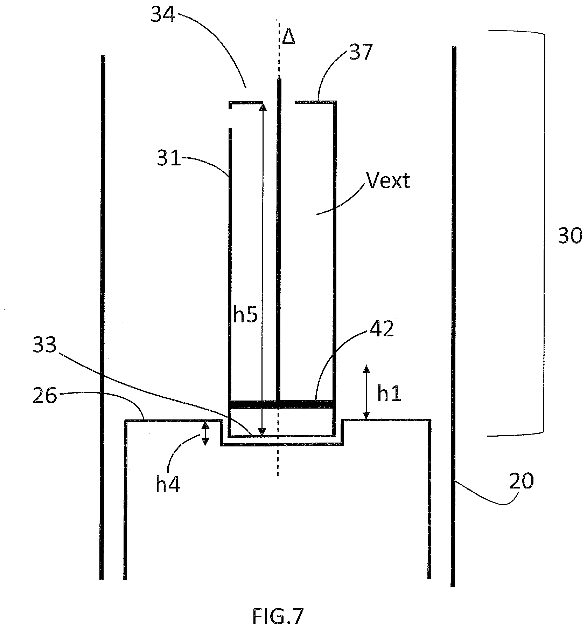

La cloison peut être désolidarisée du corps de fractionnement 25 et être retirée du réservoir 20 lorsqu'un opérateur estime que le volume d'extraction contient un volume fluidique appauvri en particules suffisant. A cette fin, il suffit alors à l'opérateur d'extraire la cloison 31 du réservoir 20 au travers de la seconde extrémité 23 du réservoir. Cette manipulation est décrite plus loin dans la description en relation avec la figure 7.

Dans les deux modes de réalisation des moyens d'extraction précédemment décrits, les orifices 32 pratiqués sur la cloison sont de préférence uniformément répartis à la fois sur la hauteur de d'extraction h3 et sur toute la périphérie de la cloison 31.

Afin de diminuer davantage la pénétration des particules à travers les orifices 32, on pourra dimensionner le diamètre des orifices afin qu'il soit inférieur au diamètre moyen des particules, conférant de ce fait une fonction de filtrage aux orifices 32.

Avantageusement, les moyens d'extraction 30, 40 peuvent agir en tant que moyen de pompage du fluide F, ce dernier s'écoulant alors, d'une extrémité amont à une extrémité aval du corps de fractionnement. Ainsi, ces moyens d'extraction 30, 40 agissent à la fois en tant que moyens d'admission du fluide dans le réservoir et comme moyens d'extraction du fluide enrichi et du fluide appauvri.

Ainsi, en variantes des deux modes de réalisation précédemment décrits, les moyens d'extraction 30, 40 comportent des moyens mécaniques de pompage couplés à la cloison 31 et dont le mouvement permet de faire circuler le fluide F dans le réservoir, soit dans le sens de pompage soit dans le sens de chasse.

Les figures 1, 4 et 5 illustrent le dispositif selon l'invention, lorsque des moyens mécaniques de pompage sont couplés à la cloison 31. La figure 4 illustre une première variante des moyens d'extractions 30, 40 lorsqu'ils comportent des moyens mécaniques de pompage, tandis que la figure 5 en illustre une seconde variante.

De manière commune à ces deux variantes, les moyens d'extraction 30, 40 comprennent un premier piston 41 de forme annulaire se déplaçant dans le volume *Vᵣₑₛₜ* compris entre le volume total *Vₜₒₜ* et le volume d'extraction *Vₑₓₜ,* c'est-à-dire entre la paroi interne du réservoir 20 et la paroi externe de la cloison 31 des moyens d'extraction 30, 40. Ils comprennent en outre un second piston 42 se déplaçant dans le volume d'extraction *Vₑₓₜ,* c'est-à-dire dans l'espace délimité par la paroi interne de la cloison 31.

Dans sa position initiale, c'est-à-dire avant que ne soit mis en oeuvre le fractionnement du fluide F comportant des particules par le dispositif selon l'invention, le premier piston repose sur la base 28 et assure une séparation étanche entre, d'une part, le volume situé entre la première extrémité 21 du réservoir 20 et la base du corps de fractionnement et, d'autre part, le volume situé entre la base plane 28 du corps de fractionnement 25 et la seconde extrémité 23 du réservoir. Dans un état initial, le volume situé entre la première extrémité 21 du réservoir 20 et la base 28 du corps de fractionnement 25 est avantageusement mis sous vide, grâce par exemple à la présence d'un opercule obturant l'orifice d'admission 22.

Dans les deux variantes des moyens d'extraction 30, 40 selon l'invention, le fonctionnement des pistons pour pomper un fluide comportant des particules dans le réservoir dans le sens de pompage est le même.

En effet, afin que le fluide se déplace dans le sens de pompage, le premier piston se déplace à partir d'une position initiale dans un sens allant de ladite première extrémité 21 à une seconde extrémité 23 du réservoir pour créer un écoulement permanent de fluide et donc permettre la formation de tourbillons dans la zone de recirculation située au débouché dudit canal. Le déplacement du second piston permet quant à lui la pénétration dudit premier volume fluidique d'intérêt dans le volume d'extraction *Vₑₓₜ* à travers la pluralité d'orifices traversants 32.

Le déplacement du premier et le déplacement du second pistons sont alors solidaires dans le sens de pompage. Avantageusement, le premier et le second pistons sont situés dans le même plan.

Dans la première variante illustrée en figure 4, la commande 43 du premier piston 41 est solidaire de la commande 43 du second piston 42, ce qui implique que les deux pistons 41, 42 se déplacent de manière identique et simultanée à la fois selon le sens de pompage et selon le sens de chasse. Ainsi, les premier et second pistons peuvent par exemple être réalisés d'une seule pièce.

La commande 43 des deux pistons se situe au niveau de la seconde extrémité 23 du réservoir 20. Un opérateur, lorsqu'il agit sur la commande des deux pistons 41, 42, peut générer un écoulement dans le réservoir 20 en modifiant la course des pistons. En agissant sur la commande 43 des pistons de sorte que ceux-ci aient une course selon le sens de pompage, l'opérateur peut générer un écoulement du fluide selon le sens de pompage pour fractionner le fluide grâce au corps de fractionnement et récupérer le volume fluidique appauvri en particules qui est contenu dans le volume de extraction *Vₑₓₜ.* L'opérateur (humain ou machine) peut aussi générer un écoulement du fluide selon le sens de chasse pour chasser le fluide contenu dans le réservoir 20 et la cloison 31 en agissant sur la commande 43 des pistons 41, 42 de sorte que ceux-ci aient une course selon le sens de chasse.

Dans la seconde variante illustrée en figure 5, le déplacement du second piston 42 est identique et simultané de celui du premier piston 41 selon le sens de pompage puisque la commande 44 du second piston 42 est solidaire de celle du premier piston 41 dans ce cas. En revanche, le premier piston 41 peut être désolidarisé, donc déplacé indépendamment du second piston 42 dans une course de piston suivant le sens de chasse puisque la commande 43 du premier piston 41 peut alors être désolidarisée de celle du second piston 42 dans ce cas. Ainsi, il est possible de chasser le volume d'intérêt riche en particules contenu dans le volume *Vᵣₑₛₜ* à la fin du processus de fractionnement et d'extraction tout en conservant le volume fluidique appauvri en particules recueilli à l'intérieur de la cloison 31.

Pour ce faire, on opère de la façon suivante : lorsque la course des premier 41 et second pistons 42 est maximale suivant le sens de pompage, c'est-à-dire, lorsque le volume *Vₑₓₜ* compris au sein de la cloison 31 contient la quantité maximale (ou souhaitée) récupérable de volume fluidique appauvri en particules, on désolidarise la commande 43 du premier piston 41 de celle 44 du second piston 42 et on agit uniquement sur la commande 43 du premier piston 41 pour le déplacer suivant le sens de chasse.

On évite ainsi, à la fin du processus de fractionnement et d'extraction, la pollution du volume d'extraction *Vₑₓₜ* par des particules et on évite ainsi le colmatage des orifices 32 par des particules, empêchant ou limitant de futurs processus de fractionnements de volumes de fluide. En effet, lors du processus de fractionnement, c'est-à-dire lorsque le premier 41 et le second 42 pistons ont une course dans le sens de pompage, des particules peuvent venir boucher les orifices 32 et perturber le bon fonctionnement du dispositif. Cela est d'autant plus vrai lorsque le dimensionnement des orifices est prévu pour filtrer les particules.

Les deux variantes précédemment décrites sont compatibles avec les premier ou second modes de réalisation des moyens d'extraction 30, 40.

Avantageusement, le premier piston 41 comprend une collerette 51 qui est disposée le long de la paroi externe de la cloison 31 des moyens d'extraction 30, 40. La collerette 51 vient lécher la paroi externe de la cloison 31 de sorte que les orifices 32 compris dans la zone de recirculation et répartis uniformément suivant la hauteur h1 soient libérés successivement en fonction de la course du premier piston 41, lorsque le piston 41 est déplacé selon le sens de pompage.

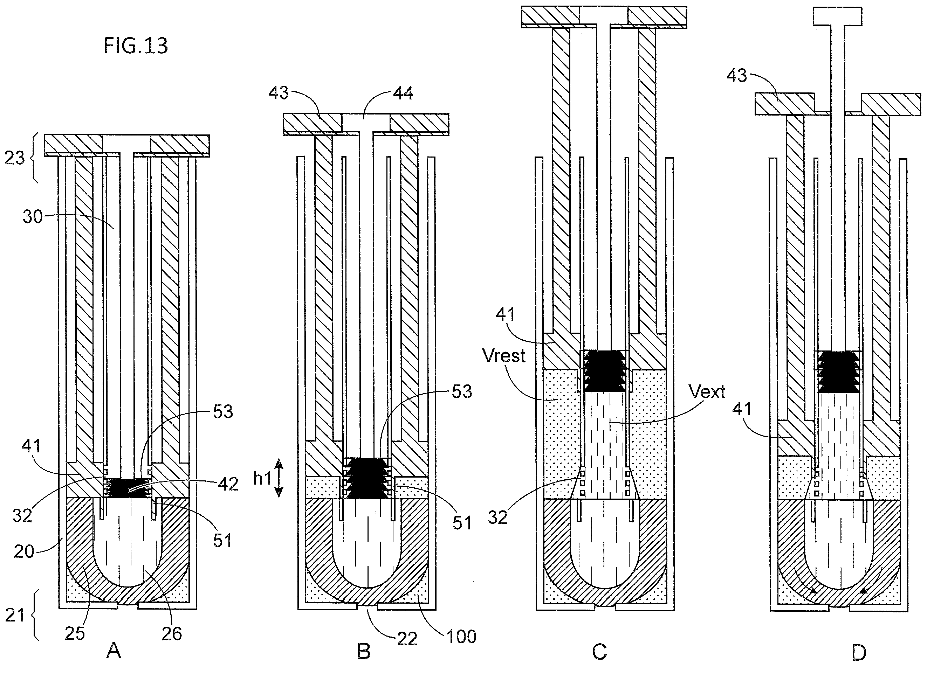

Comme cela sera explicité dans la suite de la description et en relation avec la figure 13, la collerette 51 impose un temps de retard à l'ouverture successive des orifices 32 répartis sur la cloison 31 suivant la hauteur h1 de la zone de recirculation.

Le corps de fractionnent 25 peut comprendre une tranchée 52 pratiquée au niveau de la base 28 dans laquelle vient s'insérer la collerette 51 lorsque le premier piston 41 a une course minimale selon le sens de pompage, c'est-à-dire lorsqu'il repose sur la base 28.

De préférence, le second piston 42 comprend un soufflet 53. Le soufflet 53 vient obturer, de l'intérieur de la paroi 31, les orifices 32 au début de la course du second piston 42 selon le sens de pompage et sert à empêcher l'apparition de bulles d'air qui peuvent apparaître avant l'établissement des recirculations au début du processus d'extraction du volume fluidique appauvri en particules.

Dans le cas où les moyens d'extraction 30, 40 sont réalisés selon le second mode de réalisation, il est possible d'extraire le volume d'extraction *Vₑₓₜ* automatiquement hors du réservoir 20 lorsque le procédé de fractionnement et d'extraction du fluide F comportant les particules est achevé. Il est alors préférable que les moyens d'extraction 30, 40 soient réalisés selon la seconde variante afin de pouvoir extraire simplement la cloison amovible 30.

A cette fin, la figure 7 illustre de manière schématique le principe de collecte du volume d'extraction *Vₑₓₜ.* Sur la figure 7, seuls les moyens d'extraction amovibles 30, 40, le réservoir 20, la cloison amovible et le second piston 42 ont été représentés afin de ne pas surcharger la figure.

Plus précisément, la cloison 31 comprend un moyen d'accroché 37 qui est disposé de telle sorte que le second piston 42 vienne accrocher le moyen d'accroche au bout d'une certaine hauteur h5 de course selon le sens de pompage. Ainsi, lorsqu'un opérateur déplace le piston 42 selon le sens de pompage, il est possible au bout d'une certaine course de piston, de retirer les moyens d'extractions 30, 40 du réservoir 20 et donc de récupérer le volume d'extraction *Vₑₓₜ.* Le moyen d'accroché peut être par exemple une bague fixée sur la paroi interne de la cloison 31 à une hauteur h5 par rapport à la première extrémité 33 de la cloison.

Préférentiellement, et tel qu'illustré en figure 7, la seconde extrémité 34 de la cloison fait office de moyen d'accroche 37 des moyens d'extraction. La seconde extrémité 34 est alors percée en son centre pour laisser passer la tige du second piston 42 et laisser passer l'air afin d'exploiter le principe de succion qui permet la pénétration dans le volume de extraction *Vₑₓₜ* du volume fluidique appauvri en particules à travers les orifices 32 situés dans la zone de recirculation lorsque le second piston 42 est déplacé selon le sens de pompage.

La cloison 31 peut comprendre au moins un perçage traversant (ou orifice), au niveau de la seconde extrémité 34 de la cloison, pour laisser passer davantage l'air.

La suite de la description vise à détailler un mode de réalisation avantageux du corps de fractionnement 25. En effet, il est possible d'améliorer le dispositif décrit en relation avec la figure 1 afin d'optimiser la collecte du premier volume fluidique d'intérêt appauvri en particules dans le volume d'extraction *Vₑₓₜ.* Pour cela, le corps de fractionnement 25 est muni d'une pluralité d'ailettes 4,5 fixées sur sa surface extérieure, entre son extrémité aval 28 et son extrémité amont 27.

Suivant une section droite du corps de fractionnement 25, chaque ailette s'étend entre la surface du corps de fractionnement et la paroi interne du réservoir, de telle sorte que l'espace séparant la paroi interne du réservoir du corps de fractionnement soit divisé en une pluralité de canaux de fractionnement, chaque canal de fractionnement C étant délimité par deux ailettes adjacentes 4,5.

De préférence, deux ailettes adjacentes délimitant un canal de fractionnement C forment entre elles, un angle aigu α.

Suivant l'axe central Δ, les ailettes s'étendent sur la hauteur du corps de fractionnement 25. Elles peuvent s'étendre sur la totalité de sa hauteur, c'est-à-dire entre son extrémité amont 27 et son extrémité aval 28, ou bien uniquement sur une partie de celui-ci, choisie suffisamment grande de sorte que l'effet apporté par les ailettes, et détaillé plus loin dans la description, se produise.

Par conséquent, un couple d'ailettes 4,5 ayant un angle aigu *α* entre elles, forment la section S d'un canal de fractionnement C, dans un plan transversal à la direction d'écoulement du fluide dans le canal annulaire 29.

La section S est délimitée par les deux ailettes et l'arc de cercle formé sur la surface du corps de fractionnement 25 entre les deux ailettes 4,5 et l'arc de cercle formé sur la paroi interne du réservoir 20 entre les deux ailettes 4,5.

Par conséquent, lorsqu'une pluralité de couples d'ailettes ayant un angle aigu *α* entre elles sont disposées sur la surface externe du corps de fractionnement 25, la section du canal annulaire 29 est divisée en plusieurs canaux de fractionnement C. Un couple d'ailettes 4,5 ayant un angle aigu *α* entre elles forme alors les parois latérales d'un canal de fractionnement C.

L'intérêt de scinder le canal annulaire 29, dit premier canal, en une pluralité de canaux de fractionnement C, dits seconds canaux, permet de mutualiser un effet de couche clair qui se produit dans chacun des canaux C avec l'effet de centrifugation des particules lourdes qui se produit dans la zone de recirculation, au débouché des canaux de fractionnement C.

En effet, grâce à la présence des canaux de fractionnement C entre le corps de fractionnement 25 et la paroi interne du réservoir 20, l'invention exploite la formation d'une zone de fluide appauvrie en particules assurée par les canaux de fractionnement C, aussi appelé couche claire, à proximité des parois du canal et l'effet de la zone de recirculation au débouché du corps de fractionnement 25.

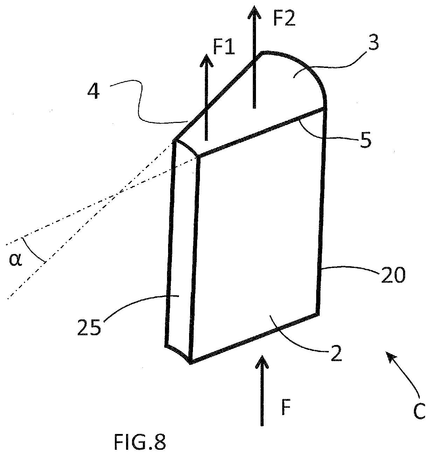

La formation de la couche claire va maintenant être expliquée en relation avec la figure 8 qui illustre le détail d'un canal de fractionnement C pris parmi une pluralité de canaux scindant le canal annulaire 29.

Si l'on suppose qu'un fluide F comportant des particules s'écoule d'une extrémité amont 2 à une extrémité aval 3 d'un canal de fractionnement C, une particule portée par le fluide F est soumise à deux forces antagonistes : une force liée à une variation radiale de la contrainte de cisaillement qui existait dans l'écoulement avant l'introduction de la particule, et une force qui résulte des interactions de type inertiel, avec les parois (ou ailettes formant les parois) du canal de fractionnement C, de l'écoulement perturbé par la présence de la particule.

La première force tend à la rapprocher des parois du canal de fractionnement C tandis que la seconde l'en repousse. Il existe un point proche des parois du canal de fractionnement C où ces deux forces s'annulent, ce qui permet à la particule d'atteindre un point d'équilibre dans son mouvement radial par rapport au sens d'écoulement, tout en continuant d'être charriée axialement par l'écoulement dans le canal de fractionnement C.

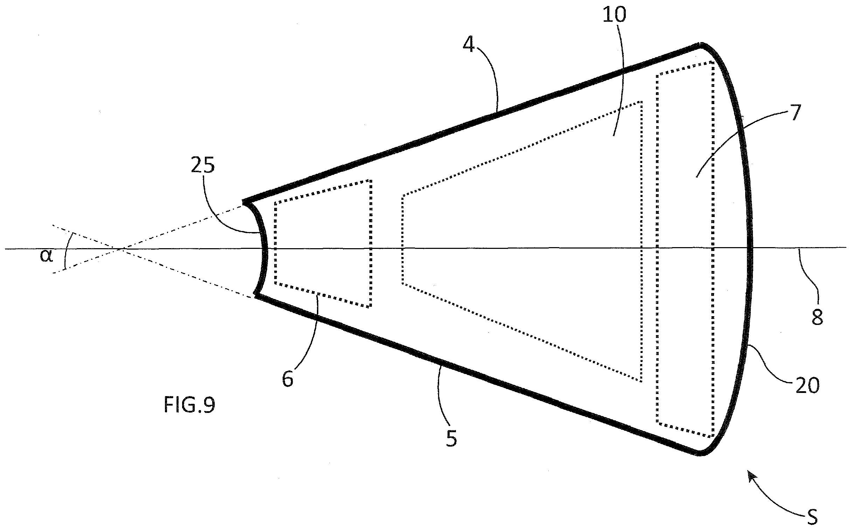

La section droite du canal de fractionnement C est illustrée en figure 9. Elle a été représentée avec une forme trapézoïdale dans le mode de réalisation illustré aux figures 8 et 9 sans que cela ne soit limitatif.

La forme donnée à la section S de chaque canal de fractionnement C vise à repousser les particules de la zone 6 où l'écartement entre les parois latérales 4,5 est minimal, en affaiblissant les forces attractives dues au gradient de cisaillement dans l'écoulement et, par conséquent, à augmenter la proportion du volume appauvri en particules dans cette zone 6.

En effet, une région d'équilibre 10 va apparaître au voisinage de la bissectrice 8 de l'angle aigu *α* formé par les deux parois latérales 4,5 du canal de fractionnement C. La région d'équilibre 10 se situe entre la zone où l'écartement des parois est maximal 7 et la zone où l'écartement des parois est minimal 6.

Du fait de l'angle aigu *α* formé par les parois latérales du canal de fractionnement C, la région d'équilibre 10 est à la fois plus étendue et plus éloignée de la zone 6 où l'écartement des parois est minimal qu'elle ne l'est de la zone 7 où l'écartement des parois est maximal. En effet, suivant la bissectrice 8, la contrainte de cisaillement, en l'absence de particule, chute plus doucement vers la zone 6 où l'écartement des parois est minimal que vers la zone 7 où l'écartement des parois est maximal. De plus, la force répulsive qui résulte des interactions de type inertiel, augmente de façon progressive à mesure que l'on se rapproche de la zone où l'écartement des parois est minimal 6.

Dès lors, on peut prévoir la formation d'un cordon concentré en particules et la formation d'un amas important de particules allongé suivant la bissectrice 8 dans la région d'équilibre 10. La région d'équilibre 10 est alors une région à forte concentration en particules, éloignée de la zone où l'écartement des parois est minimal, et entourée d'une couche claire appauvrie en particules à proximité des parois.

Ainsi, dans un canal de fractionnement C, le fluide est fractionné avec précision en deux volumes fluidiques. Dans le cas où le corps de fractionnement 25 est muni à sa périphérie d'une pluralité de canaux de fractionnement C et dans le cas où un écoulement d'un fluide F comportant des particules a lieu dans le sens de pompage dans le dispositif selon l'invention, on comprend qu'au débouché du corps de fractionnement 25, les particules suffisamment massives et provenant de la région d'équilibre 10 de chaque canal de fractionnement C sont concentrées sur des lignes de flux qui s'épanouissent en passant de la zone de restriction formée par le canal annulaire 29 à la zone à forte section au débouché du corps de fractionnement 25 sans être affecté par le phénomène de recirculation. Ainsi, les canaux de fractionnement C servent à optimiser le phénomène de recirculation en effectuant un fractionnement préalable du fluide F comportant des particules.

Le fractionnement d'un fluide comprenant des particules à l'aide des canaux de fractionnement C tel que précédemment décrit, peut être amélioré par différentes configurations structurelles possibles des canaux de fractionnement C, afin de déplacer davantage la région d'équilibre 10 riche en particules vers la zone 7 où l'écartement entre les parois est maximal et, par conséquent, d'augmenter le volume fluidique appauvri en particules.

Ainsi, un premier mode de réalisation des canaux de fractionnement C, qui représente aussi la manière la plus simple d'optimiser le fractionnement, consiste à réaliser les canaux de fractionnement C de sorte que leur section droite soit de forme triangulaire. Pour ce faire, on fixe les ailettes 4,5 d'un canal de fractionnement C sur la surface du corps de fractionnement 25 de sorte que l'écartement entre les deux ailettes 4,5 soit pratiquement nul au niveau de la fixation sur le corps de fractionnement. On obtient ainsi une section droite de forme sensiblement triangulaire, la base de la section triangulaire étant alors définie par la paroi interne du réservoir 20. Cette forme est doublement avantageuse : en effet, la conception du canal de fractionnement C s'en trouve simplifiée et les forces attractives dues au gradient de cisaillement sont davantage affaiblies dans la zone où l'écartement des parois est minimal 6.

D'autre part, lorsque le corps de fractionnement 25 a une forme paraboloïdale ou une forme d'ogive tronquée, les canaux C possèdent une section transversale à la direction d'écoulement du fluide décroissante selon le sens de pompage compte tenu de l'évasement du corps de fractionnement 25. Ainsi lorsque le fluide s'écoule selon le sens de pompage, l'extrémité amont 2 du canal C par lequel pénètre le fluide a une section transversale à la direction d'écoulement plus grande que la section transversale à la direction d'écoulement de l'extrémité aval 3 du canal C par lequel sort le fluide. L'avantage d'une telle diminution de la section est de restreindre la surface de la région d'équilibre 10 au fur et à mesure de la progression du fluide dans le canal.

De plus, la forme paraboloïdale ou d'ogive tronquée du corps de fractionnement 25, en plus de rétrécir la section des canaux transversale à l'écoulement du fluide selon le sens de pompage, crée un effet de centrifugation qui éloigne les particules du corps de fractionnement 25 en déplaçant la région d'équilibre 10 des particules vers la paroi interne du réservoir 20. Les particules sont donc repoussées à la périphérie du réservoir 20, ce qui facilite la séparation (et donc l'extraction) du volume fluidique enrichi et du volume fluidique appauvri en particules.

L'effet qui vient d'être décrit, peut être accentué par une conception avantageuse des canaux de fractionnement C, qu'importe la forme du corps de fractionnement 25. Ainsi, un second mode de réalisation des canaux de fractionnement C consiste à augmenter l'épaisseur des ailettes 4,5 selon le sens de pompage et/ou à diminuer l'angle aigu *α* de chaque canal C suivant le sens de pompage.

Ce mode de réalisation est compatible avec le premier mode de réalisation.

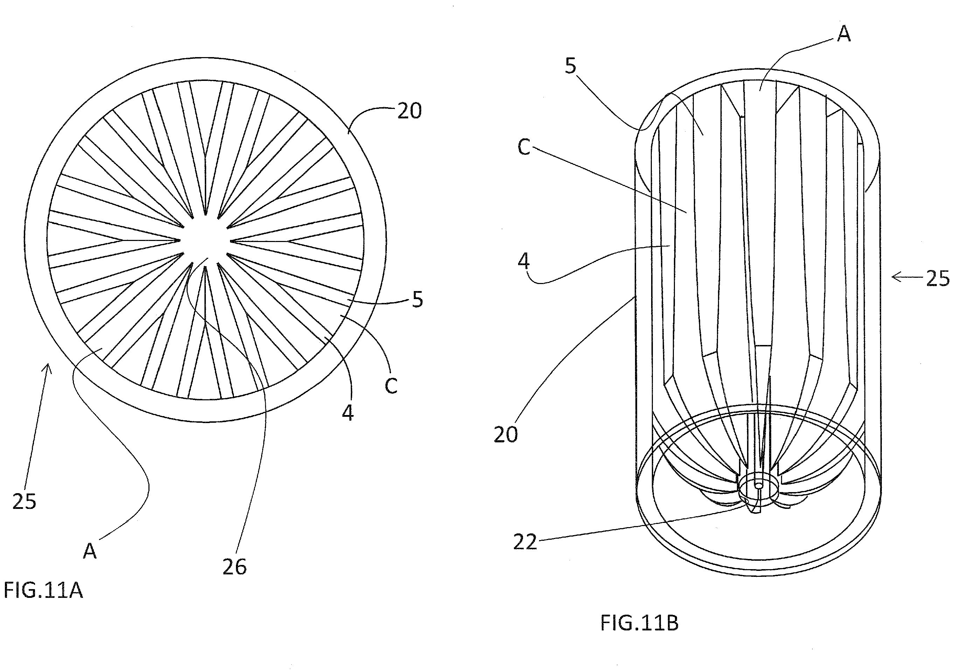

La figure 11A illustre une vue en coupe transversale du corps de fractionnement lorsque les canaux de fractionnement C sont réalisés selon le premier et le second modes de réalisation.

La figure 11B illustre une vue en relief du corps de fractionnement du corps de fractionnement dans cette même configuration des canaux de fractionnement C.

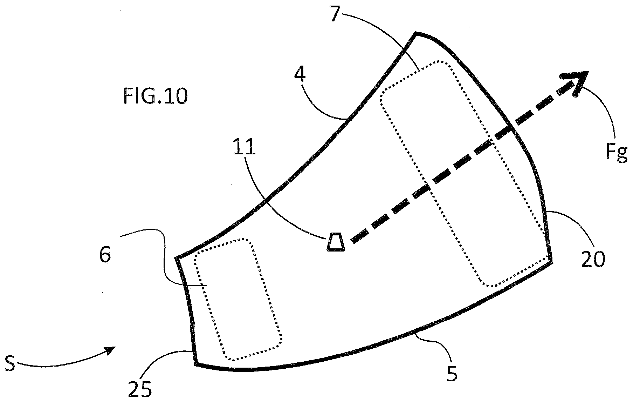

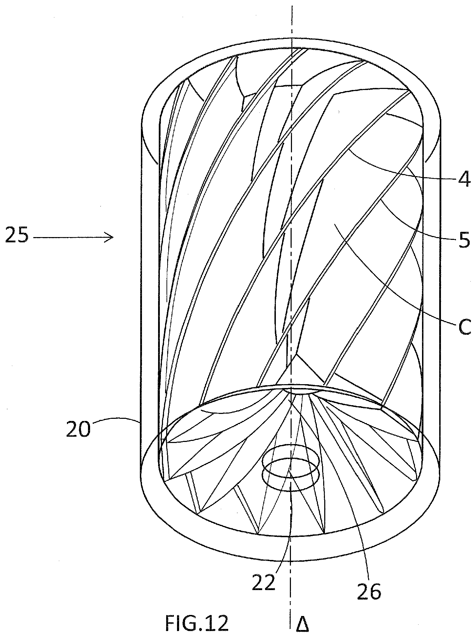

Le troisième mode de réalisation des canaux de fractionnement C représente la configuration structurelle la plus avantageuse en termes de performances et est illustré en figure 10 et en figure 12. Ce troisième mode de réalisation consiste en ce que chaque canal de fractionnement C soit vrillé par rapport à l'axe de symétrie du corps de fractionnement 25. Plus précisément, la figure 10 illustre une vue en coupe transversale du corps de fractionnement selon ce troisième mode de réalisation et la figure 12 illustre une vue en relief du corps de fractionnement 25 selon ce même mode de réalisation.

Pour réaliser cette configuration, on vrille les ailettes 4,5 d'un même canal de fractionnement C autour de l'axe central Δ du corps de fractionnement. L'avantage conféré par ce mode de réalisation est de créer une composante radiale *F_{g}* à l'écoulement et d'induire ainsi une centrifugation des particules 11 lors de l'écoulement du fluide entre la première extrémité et la seconde extrémité du canal. Cette composante radiale *F_{g}* est dirigée vers la zone où l'écartement des parois latérales est maximal 7 et favorise donc davantage l'appauvrissement en particules de la zone où l'écartement des deux ailettes 4,5 est minimal 6.

La forme vrillée peut être donnée à un canal de section, triangulaire ou trapézoïdale.

Le troisième mode de réalisation des canaux de fractionnement C est compatible avec le premier et le second modes de réalisation des canaux de fractionnement C et peut être réalisé quelle que soit la forme du corps de fractionnement 25.

Ainsi, la configuration structurelle la plus avantageuse, en termes de performances des canaux de fractionnement C, consiste en ce que ceux-ci soient réalisés selon le premier, le second et le troisième modes de réalisation pris en combinaison, et en ce que le corps de fractionnement 25 ait une forme d'ogive tronquée.

Avantageusement, on cherche à simplifier la réalisation du dispositif selon l'invention et surtout à obtenir une zone de recirculation homogène au niveau du sillage du corps de fractionnement 25. Par homogène, on entend sans perturbations de l'écoulement.

Ainsi, de préférence, le corps de fractionnement 25 comprend une pluralité de canaux de fractionnement C uniformément distribués sur la périphérie du corps de fractionnement 25. Ces derniers sont réalisés de sorte que deux canaux successifs aient une ailette 4,5 commune. On peut ainsi simplifier la réalisation du dispositif et aussi, obtenir une zone de recirculation homogène au niveau du sillage du corps de fractionnement 25.

L'obtention d'une zone de recirculation homogène au niveau du sillage du corps de fractionnement 25, peut être également obtenue en disposant un nombre pair de couples d'ailettes 4, 5, donc un nombre pair de canaux de fractionnement C fixés sur le corps de fractionnement 25 de sorte que l'angle aigu formé par les ailettes d'un premier canal de fractionnement C soit opposé à l'angle aigu formé par les ailettes d'un second canal, diamétralement opposé au premier canal.

La figure 13 illustre un processus de fractionnement d'un fluide comportant des particules et l'extraction d'un premier volume fluidique d'intérêt, appauvri en particules, grâce au dispositif de fractionnement et d'extraction selon l'invention.

Dans l'exemple illustré en figure 13, le corps de fractionnement peut ou non comprendre des ailettes formant des canaux C, tel que décrit ci-dessus.

Les moyens d'extraction 30, 40 décrits précédemment incluent une collerette 51 montée sur le premier piston 41 et un soufflet 53 monté sur le second piston 42. Les moyens d'extraction 30, 40 sont réalisés selon le premier mode de réalisation et la première variante, les pistons se déplaçant dans un même plan.

Lors de l'étape A, c'est-à-dire avant le début du processus, aucun fluide n'est admis dans le réservoir 20 et le volume de la partie du réservoir comprise entre le premier piston 41 et la première extrémité du réservoir est mis sous vide. Le vide est maintenu grâce à un opercule qui obture de manière étanche l'orifice d'admission.

L'intérêt de la mise sous vide est d'éviter les bulles d'air qui perturberaient les phénomènes physiques que sont la recirculation et la formation de couche claire.

Le premier piston 41 et le second piston 42 reposent sur la base plane 28. La collerette 51, est alors insérée dans une tranchée pratiquée dans la base 28. Le soufflet 53, compris entre la base 28 et le second piston 42 est comprimé.

Avant l'étape B, l'opercule est rompu et un échantillon de fluide 100 comprenant des particules est présenté au dispositif selon l'invention. Le fluide 100 comportant des particules s'engouffre alors autour du corps de fractionnement. A l'étape B, les commandes 43 et 44 (la commande 44 du second piston étant solidaire de celle du premier piston lors d'un déplacement des pistons de la première 21 à la seconde extrémité 23 du réservoir), du premier 41 et du second 42 pistons respectivement, sont alors activées afin que le premier 41 et le second 42 pistons se déplacent de la première extrémité 21 jusqu'à la seconde extrémité 23 du réservoir. De ce fait un écoulement s'établit et il s'agit du début du processus de fractionnement et de d'extraction.

Plus précisément, le fluide 100 comprenant des particules est pompé et pénètre dans le réservoir 20 au niveau de l'orifice d'admission 22 situé au niveau de la première extrémité 21 du réservoir 20. Le fluide 100 s'écoule alors dans la pluralité de canaux du corps de fractionnement 25 selon le sens de pompage. Une zone de recirculations se crée progressivement au niveau du sillage du corps de fractionnement 25. Puisque les pistons se déplacent vers la seconde extrémité 23 du réservoir, le soufflet 53 qui se détend progressivement évite l'introduction d'air dans le volume d'extraction qui peut apparaître au début du processus de fractionnement et d'extraction lorsque la collerette 51 libère les orifices 32 situés le plus près de la base 28.

La collerette 51 qui libère progressivement les orifices 32, en fonction de leur hauteur par rapport à la base 28, impose un temps de retard à l'ouverture des orifices 32 afin d'attendre l'établissement des recirculations et donc la formation d'une zone de recirculation appauvrie en particules. En effet, au début du processus de fractionnement et d'extraction, c'est-à-dire lorsque le premier piston 41 qui repose sur la base 28 est déplacé suivant le sens de pompage, la zone de recirculation s'établit progressivement dans le sillage du corps de fractionnement 25 et n'atteint la hauteur h₁ qu'après un certain temps d'établissement.

Lors de l'étape C, l'opérateur estime que le volume appauvri en particules récupéré dans le moyen d'extraction 30 est suffisant. Par conséquent il n'agit plus sur les commandes 43 et 44. Durant cette étape, on a un volume fluidique appauvri *Vₑₓₜ* en particules situé dans la cloison et un volume fluidique enrichi en particules dans le reste *Vᵣₑₛₜ* du réservoir 20. L'opérateur va alors vouloir éliminer ou récupérer le volume fluidique enrichi en particules afin de ne conserver que le volume fluidique appauvri en particules *Vₑₓₜ.*

Pour cela, et tel qu'illustré dans l'étape D, l'opérateur va agir sur la commande 43 du premier piston 41 qui peut être désolidarisée de celle du second piston 42. La commande 44 du second piston n'est pas activée. L'opérateur va alors déplacer le premier piston 41 de la seconde extrémité 23 du réservoir à la première extrémité du réservoir 21. Le volume fluidique enrichi en particules *Vᵣₑₛₜ* s'écoule alors dans le réservoir 20 selon le sens de chasse et est évacué du réservoir au niveau de l'orifice d'admission 22 situé à la première extrémité 21 du réservoir 20. Lorsque le premier piston 41 est en bout de course, le réservoir 20 ne contient plus que le volume fluidique appauvri en particules, *Vₑₓₜ.* L'opérateur peut alors manipuler le réservoir 20 sans risque de polluer le volume fluidique appauvri en particules par des particules.

Lors de la configuration des différents éléments formant le dispositif selon l'invention, on choisira le volume d'extraction *Vₑₓₜ* de sorte que le rapport entre le volume d'extraction *Vₑₓₜ* et le volume total *Vₜₒₜ* du réservoir 20 soit inférieur au rapport entre le volume appauvri estimé dans le fluide et le volume total de fluide. Ainsi, on déterminera le volume d'extraction *Vₑₓₜ* en fonction de l'application et du fluide destiné à être pompé.

Par exemple, dans le cas où le dispositif selon l'invention est appliqué au fractionnement et à l'extraction du sang, le volume fluidique appauvri en particules sera le plasma sanguin. On sait que pour un litre de sang, le volume de plasma est de 400 à 500 mL. On choisira alors un volume d'extraction *Vₑₓₜ* de plasma tel que *Vₑₓₜ* < 0.4 *Vₜₒₜ*.

De manière générale, on choisira le volume d'extraction *Vₑₓₜ* de telle sorte qu'il soit petit par rapport au volume total *Vₜₒₜ* de fluide qui peut être pompé dans le réservoir. Le choix d'un volume d'extraction *Vₑₓₜ* petit devant le volume total *Vₜₒₜ* permet de remplir le volume d'extraction *Vₑₓₜ* avant que l'effet de centrifugation ne disparaisse. En effet, à la fin du processus de fractionnement et d'extraction, c'est-à-dire lorsqu'il n'y a plus de fluide à pomper dans le réservoir 20 au travers de l'orifice d'admission 22 ou que la course des pistons selon le sens de pompage est ralentie, l'effet de centrifugation qui a lieu dans la zone de recirculation tend à diminuer brusquement, ce qui amène quelques particules à être aspirées dans le volume d'extraction *Vₑₓₜ* et donc à le polluer.

Les moyens d'extraction 30, 40 doivent être dimensionnés et actionnés judicieusement afin de ne pas déstabiliser ou atténuer le phénomène de recirculation qui se crée au débouché du corps de fractionnement 25. En effet, un pompage trop fort du fluide F comportant des particules aurait pour effet de plaquer l'écoulement à la paroi interne du réservoir 20 et de faire disparaître le vortex tandis qu'un pompage trop faible ne permettrait pas la formation des tourbillons.

Un équilibre nécessaire doit être trouvé entre l'admission et l'extraction pour ne pas déstabiliser les tourbillons.

Aussi, le dimensionnement des moyens d'extraction 30, 40 devra être préférentiellement estimé par simulation pour permettre un rendement d'extraction maximal.

Le dispositif de fractionnement et d'extraction selon l'invention trouvera avantageusement application dans le domaine médical, afin de fractionner un échantillon de sang. Le dispositif selon l'invention permet alors de recueillir un volume de plasma, appauvri en globules rouges (particules) et un volume de sang qui est riche en globules rouges.

Le dispositif selon l'invention peut alors servir de dispositif de pré-séparation en amont d'un dispositif de purification plus évolué. L'invention permet alors un gain de temps non négligeable puisque le fractionnement permis par le dispositif décrit est rapide. En effet, dans le cas du sang et grâce au dispositif selon l'invention, il est possible de remplir un réservoir d'un volume de plasma de quelques mL en un temps de l'ordre de la dizaine de secondes.

## Revendications

1. Dispositif de fractionnement milli-système, d'un fluide (F) de type échantillon de sang, comportant des particules de type globules de sang, et d'extraction d'un volume appauvri en particules et d'un volume enrichi en particules, comportant :
- un réservoir cylindrique (20) muni à une première extrémité (21) d'un orifice d'admission (22) destiné à alimenter le réservoir en fluide dans un sens de pompage allant de ladite première extrémité (21) à une seconde extrémité (23) du réservoir ;
- un corps de fractionnement (25), s'étendant le long d'un axe central (Δ) dudit réservoir dans lequel il est logé, entre une extrémité amont (27) et une extrémité aval (28), ladite extrémité amont (27) du corps de fractionnement étant disposée au surplomb dudit orifice d'admission (22), une section dudit corps de fractionnement (25) se réduisant brusquement à une hauteur inférieure au dixième de sa hauteur totale au niveau de son extrémité aval pour former une base plane (28) ;
- le corps de fractionnement (25) définissant avec ledit réservoir (20), un premier canal (29) formant une zone de restriction de l'écoulement du fluide et débouchant au niveau de ladite base plane (28) sur une zone de singularité géométrique, c'est-à-dire, un élargissement brusque de la section dans laquelle le fluide peut transiter en aval de la base plane (28), ladite zone de singularité géométrique formant une zone de recirculation du fluide ; et
- des moyens d'extraction (30,40), situés en aval dudit corps de fractionnement (25), destinés à séparer et à extraire ledit volume appauvri et ledit volume enrichi, lesdits moyens d'extraction comportant une cloison (31), par exemple annulaire, délimitant un volume d'extraction *(Vₑₓₜ)* destiné à recevoir lors d'une circulation du fluide dans le sens de pompage, une phase appauvrie en particules formée dans ladite zone de recirculation au niveau de ladite cloison (31).

2. Dispositif de fractionnement d'un fluide selon la revendication 1, **caractérisé en ce que** ledit corps de fractionnement est de forme axisymétrique et paraboloïdale.

3. Dispositif de fractionnement d'un fluide selon la revendication 1 ou 2, **caractérisé en ce que** la section dudit corps de fractionnement s'accroît entre son extrémité amont et son extrémité aval.

4. Dispositif de fractionnement d'un fluide selon l'une quelconque des revendications 1 ou 2, **caractérisé en ce que** la section du corps de fractionnement (25) est sensiblement croissante entre son extrémité amont et une zone intermédiaire, située en amont de l'extrémité aval et est sensiblement constante entre la zone intermédiaire et l'extrémité aval.

5. Dispositif de fractionnement d'un fluide selon l'une quelconque des revendications précédentes **caractérisé en ce que** ladite cloison (31) comporte une pluralité d'orifices traversant (32) pratiqués au niveau de ladite zone de recirculation, lesdits orifices définissant un diamètre inférieur au diamètre moyen des particules de type globules rouges.

6. Dispositif de fractionnement d'un fluide selon l'une quelconque des revendications précédentes, **caractérisé en ce que** lesdits moyens d'extraction comprennent un premier piston (41) se déplaçant entre la paroi interne dudit réservoir et ladite cloison, pour récupérer ledit volume enrichi, et un second piston (42) se déplaçant dans l'espace délimité par ladite cloison, pour récupérer ledit volume appauvri, lesdits premier et deuxième pistons se déplaçant à partir d'une position initiale dans un sens allant de ladite première extrémité (21) à une seconde extrémité (23) dudit réservoir, dit sens de pompage ou sens d'écoulement, pour créer des tourbillons dans ladite zone de recirculation située au débouché dudit premier canal (29) .

7. Dispositif de fractionnement d'un fluide selon la revendication 6, **caractérisé en ce que** lesdits premier (41) et second pistons (42) sont réalisés d'une seule pièce.

8. Dispositif de fractionnement d'un fluide selon la revendication 6, **caractérisé en ce que** le déplacement dudit second piston (42) est solidaire de celui dudit premier piston (41) dans un sens allant de ladite première extrémité (21) à ladite seconde extrémité (23) dudit réservoir, ledit second piston (42) pouvant être désolidarisé dudit premier piston et déplacé indépendamment dudit premier piston (41) dans un sens allant de ladite seconde extrémité à ladite première extrémité aval dudit réservoir afin d'expulser un éventuel volume enrichi résiduel *(Vᵣₑₛₜ)* présent dans ledit réservoir.

9. Dispositif de fractionnement d'un fluide selon l'une quelconque des revendications 6 à 8, **caractérisé en ce que** le second piston (42) comprend un soufflet (53) .

10. Dispositif de fractionnement d'un fluide selon l'une quelconque des revendications 6 à 9, **caractérisé en ce que** le premier piston (41) comprend une collerette disposée le long de ladite cloison (31), ladite collerette étant apte à libérer successivement lesdits orifices (32) en fonction de la course dudit premier piston dans une direction allant de ladite première extrémité (21) à ladite seconde extrémité (23) dudit réservoir.

11. Dispositif de fractionnement d'un fluide selon l'une quelconque des revendications 6 à 10 **caractérisé en ce que** les moyens d'extraction (30,40) sont amovibles et destiné à être insérés en partie dans le réservoir dans un évidement (39) réalisé dans la base (28) du corps de fractionnement.

12. Dispositif de fractionnement d'un fluide selon l'une quelconque des revendications précédentes, **caractérisé en ce que** le corps de fractionnement (25) est muni d'une pluralité d'ailettes (4,5) fixées sur sa surface, entre son extrémité aval et son extrémité amont, chaque ailette s'étendant entre la surface du corps de fractionnement et la paroi interne du réservoir, de telle sorte que l'espace séparant ladite paroi interne du réservoir, du corps de fractionnement soit divisé en une pluralité de second canaux (C), chaque second canal étant délimité par deux ailettes adjacentes.

13. Dispositif de fractionnement d'un fluide selon la revendication 12, **caractérisé en ce que** deux ailettes adjacentes (4,5) délimitant un second canal forment, entre elles, un angle aigu (α).

14. Dispositif de fractionnement d'un fluide selon la revendication 12 ou 13, **caractérisé en ce que** la section d'un canal secondaire (C), transversale à la direction d'écoulement dudit fluide, dite section droite, est de forme triangulaire.

15. Dispositif de fractionnement d'un fluide selon l'une quelconque des revendications 12 à 14, **caractérisé en ce que** l'épaisseur desdites ailettes (4,5) est croissante de ladite extrémité amont à ladite extrémité aval du corps de fractionnement (25) et/ou l'angle aigu (α) formé par lesdites ailettes formant un canal de fractionnement (C) est décroissant de ladite extrémité amont à ladite extrémité aval dudit corps de fractionnement (25).

16. Dispositif de fractionnement d'un fluide selon l'une quelconque des revendications 12 à 15, **caractérisé en ce que** chaque canal de fractionnement (C) est vrillé par rapport à un axe parallèle (Δ) à la direction d'écoulement dudit fluide.

17. Utilisation d'un dispositif de fractionnement d'un fluide selon l'une quelconque des revendications précédentes pour fractionner un échantillon de sang (F) entre un volume de plasma appauvri en globules, et un volume de sang enrichi en globules et pour récupérer ledit volume de plasma.

## Patentansprüche

1. Millisystem-Fraktionierungsvorrichtung zum Fraktionieren eines Fluids (F) vom Typ Blutprobe, das Partikel vom Typ Blutzellen enthält, und zum Extrahieren eines partikelarmen Volumens und eines partikelreichen Volumens, enthaltend:
- einen zylindrischen Behälter (20), der an einem ersten Ende (21) mit einer Einlassöffnung (22) zum Versorgen des Behälters mit Fluid in einer Pumprichtung von dem ersten Ende (21) zu einem zweiten Ende (23) des Behälters versehen ist;
- einen Fraktionierungskörper (25), der sich entlang einer zentralen Achse (Δ) des Behälters, in dem er aufgenommen ist, zwischen einem stromaufwärtigen Ende (27) und einem stromabwärtigen Ende (28) erstreckt, wobei das stromaufwärtige Ende (27) des Fraktionierungskörpers über der Einlassöffnung (22) überhängend angeordnet ist,
wobei ein Querschnitt des Fraktionierungskörpers (25) im Bereich seines stromabwärtigen Endes auf einer Höhe von weniger als einem Zehntel seiner Gesamthöhe abrupt abnimmt, um eine ebene Basis (28) zu bilden;
- wobei der Fraktionierungskörper (25) mit dem Behälter (20) einen ersten Kanal (29) definiert, der einen Restriktionsbereich für die Strömung des Fluids bildet und im Bereich der ebenen Basis (28) in einen geometrischen Singularitätsbereich mündet, d. h. in eine abrupte Erweiterung des Querschnitts, in welchen das Fluid der ebenen Basis (28) nachgelagert weiterströmen kann, wobei der geometrische Singularitätsbereich einen Fluidrücklaufbereich bildet; und
- Extraktionseinrichtungen (30, 40), die dem Fraktionierungskörper (25) nachgelagert und dazu bestimmt sind, das partikelarme Volumen und das partikelreiche Volumen zu trennen und zu extrahieren, wobei die Extraktionseinrichtungen eine beispielsweise ringförmige Trennwand (31) enthalten, die ein Extraktionsvolumen (Vₑₓₜ) begrenzt, das dazu bestimmt ist, bei Strömung des Fluids in Pumprichtung eine partikelarme Phase aufzunehmen, die in dem Rücklaufbereich in Höhe der Trennwand (31) gebildet wird.

2. Vorrichtung zum Fraktionieren eines Fluids nach Anspruch 1, **dadurch gekennzeichnet, dass** der Fraktionierungskörper eine achsensymmetrische und paraboloidale Form hat.

3. Vorrichtung zum Fraktionieren eines Fluids nach Anspruch 1 oder 2, **dadurch gekennzeichnet, dass** sich der Querschnitt des Fraktionierungskörpers zwischen seinem stromaufwärtigen Ende und seinem stromabwärtigen Ende vergrößert.

4. Vorrichtung zum Fraktionieren eines Fluids nach einem der Ansprüche 1 oder 2, **dadurch gekennzeichnet, dass** der Querschnitt des Fraktionierungskörpers (25) zwischen einem stromaufwärtigen Ende und einem Zwischenbereich, der dem stromabwärtigen Ende vorgelagert ist, im Wesentlichen zunimmt und zwischen dem Zwischenbereich und dem stromabwärtigen Ende im Wesentlichen konstant ist.

5. Vorrichtung zum Fraktionieren eines Fluids nach einem der vorangehenden Ansprüche, **dadurch gekennzeichnet, dass** die Trennwand (31) eine Mehrzahl von Durchgangsöffnungen (32) aufweist, die in Höhe des Rücklaufbereichs ausgebildet sind, wobei die Öffnungen einen Durchmesser definieren, der geringer als der mittlere Durchmesser der Partikel vom Typ roter Blutkörperchen ist.

6. Vorrichtung zum Fraktionieren eines Fluids nach einem der vorangehenden Ansprüche, **dadurch gekennzeichnet, dass** die Extraktionseinrichtungen einen ersten Kolben (41) enthalten, der sich zwischen der Innenwand des Behälters und der Trennwand verlagert, um das partikelreiche Volumen zu gewinnen, sowie einen zweiten Kolben (42), der sich in dem von der Trennwand begrenzten Raum verlagert, um das partikelarme Volumen zu gewinnen, wobei der erste und der zweite Kolben sich ausgehend von einer Anfangsstellung in einer Richtung vom ersten Ende (21) zu einem zweiten Ende (23) des Behälters, Pumprichtung oder Strömungsrichtung genannt, verlagern, um Wirbel in dem Rücklaufbereich zu erzeugen, der sich an der Mündung des ersten Kanals (29) befindet.

7. Vorrichtung zum Fraktionieren eines Fluids nach Anspruch 6, **dadurch gekennzeichnet, dass** der erste (41) und der zweite Kolben (42) einstückig ausgebildet sind.

8. Vorrichtung zum Fraktionieren eines Fluids nach Anspruch 6, **dadurch gekennzeichnet, dass** die Verlagerung des zweiten Kolbens (42) bewegungsgekoppelt mit der des ersten Kolbens (41) in einer Richtung vom ersten Ende (21) zum zweiten Ende (23) des Behälters erfolgt, wobei der zweite Kolben (42) vom ersten Kolben gelöst und unabhängig vom ersten Kolben (41) in einer Richtung vom zweiten Ende zum ersten stromabwärtigen Ende des Behälters verlagert werden kann, um ein in dem Behälter eventuell vorhandenes partikelreiches Restvolumen (Vᵣₑₛₜ) auszustoßen.

9. Vorrichtung zum Fraktionieren eines Fluids nach einem der Ansprüche 6 bis 8, **dadurch gekennzeichnet, dass** der zweite Kolben (42) einen Balg (53) enthält.

10. Vorrichtung zum Fraktionieren eines Fluids nach einem der Ansprüche 6 bis 9, **dadurch gekennzeichnet, dass** der erste Kolben (41) einen Kragen enthält, der entlang der Trennwand (31) angeordnet ist, wobei der Kragen dazu geeignet ist, nacheinander die Öffnungen (32) in Abhängigkeit von dem Hub des ersten Kolbens in einer Richtung von dem ersten Ende (21) zum zweiten Ende (23) des Behälters freizugeben.

11. Vorrichtung zum Fraktionieren eines Fluids nach einem der Ansprüche 6 bis 10, **dadurch gekennzeichnet, dass** die Extraktionseinrichtungen (30, 40) abnehmbar und dazu bestimmt sind, teilweise in dem Behälter in eine Ausnehmung (39) eingesetzt zu werden, die in der Basis (28) des Fraktionierungskörpers ausgebildet ist.

12. Vorrichtung zum Fraktionieren eines Fluids nach einem der vorangehenden Ansprüche, **dadurch gekennzeichnet, dass** der Fraktionierungskörper (25) mit einer Mehrzahl von Rippen (4, 5) versehen ist, die an seiner Oberfläche zwischen seinem stromabwärtigen Ende und seinem stromaufwärtigen Ende befestigt sind, wobei jede Rippe sich zwischen der Oberfläche des Fraktionierungskörpers und der Innenwand des Behälters erstreckt, so dass der Raum, der die Innenwand des Behälters vom Fraktionierungskörper trennt, in eine Mehrzahl von zweiten Kanälen (C) unterteilt ist, wobei jeder zweite Kanal von zwei aneinandergrenzenden Rippen begrenzt wird.

13. Vorrichtung zum Fraktionieren eines Fluids nach Anspruch 12, **dadurch gekennzeichnet, dass** zwei aneinandergrenzende Rippen (4, 5), die einen zweiten Kanal begrenzen, einen spitzen Winkel (α) miteinander einschließen.

14. Vorrichtung zum Fraktionieren eines Fluids nach Anspruch 12 oder 13, **dadurch gekennzeichnet, dass** der Querschnitt eines zweiten Kanals (C), der quer zur Strömungsrichtung des Fluids verläuft, gerader Abschnitt genannt, dreieckförmig ist.

15. Vorrichtung zum Fraktionieren eines Fluids nach einem der Ansprüche 12 bis 14, **dadurch gekennzeichnet, dass** die Dicke der Rippen (4, 5) von dem stromaufwärtigen Ende zum stromabwärtigen Ende des Fraktionierungskörpers (25) zunimmt und/oder der spitze Winkel (α), den die einen Fraktionierungskanal (C) bildenden Rippen einschließen, von dem stromaufwärtigen Ende zum stromabwärtigen Ende des Fraktionierungskörpers (25) abnimmt.

16. Vorrichtung zum Fraktionieren eines Fluids nach einem der Ansprüche 12 bis 15, **dadurch gekennzeichnet, dass** jeder Fraktionierungskanal (C) bezüglich einer parallel zur Strömungsrichtung des Fluids verlaufenden Achse (Δ) gewunden verläuft.

17. Verwendung einer Vorrichtung zum Fraktionieren eines Fluids nach einem der vorangehenden Ansprüche, um eine Blutprobe (F) in ein zellenarmes Plasmavolumen und ein zellenreiches Blutvolumen zu fraktionieren und um das Plasmavolumen zu gewinnen.

## Claims

1. Device for a milli-system fractionation of a fluid (F) of a blood sample type containing particles of blood-like type, and for the extraction of a particle-lean volume and of a particle-rich volume, comprising:
- a cylindrical reservoir (20) equipped at a first end (21) with an inlet orifice (22) intended to supply the reservoir with fluid in a direction of pumping from said first end (21) toward a second end (23) of the reservoir;
- a fractionation body (25), extending along a central axis (Δ) of said reservoir in which it is housed, between an upstream end (27) and a downstream end (28), said upstream end (27) of the fractionation body being positioned in vertical alignment above said inlet orifice (22), a cross section of said fractionation body (25) reducing abruptly to a height less than one tenth of its total height at its downstream end forming a flat base (28);
- the fractionation body defining, with said reservoir, a first passage (29) forming a restriction zone of fluid flow and opening at said flat base (28) onto a zone with a geometric singularity that is an abrupt enlargement of the section in which the fluid can pass downstream of the plane base (28), said geometric singularity zone forming a fluid recirculation zone; and
- extraction means (30, 40), situated downstream of said fractionation body (25), intended to separate and extract said lean volume and said rich volume, said extraction means comprising a partition (31), for example an annular partition, delimiting an extraction volume (*Vₑₓₜ*) intended, as fluid circulates in the direction of pumping, to receive a particle-lean phase formed in said recirculation zone in the region of said partition (31).

2. Device for the fractionation of a fluid according to claim 1, **characterised in that** said fractionation body is of axisymmetric and paraboloidal shape.

3. Device for the fractionation of a fluid according to claim 1 to 2, **characterised in that** the cross section of said fractionation body increases between its upstream end and its downstream end.

4. Device for the fractionation of a fluid according to any one of claims 1 to 2, **characterised in that** the cross section of the fractionation body (25) is substantially increasing between its upstream end and an intermediate zone, situated upstream of the downstream end, and is substantially constant between the intermediate zone and the downstream end.

5. Device for the fractionation of a fluid according to any one of the preceding claims **characterised in that** said partition (31) comprises a plurality of through orifices (31) formed in the region of said recirculation zone, said orifices defining a diameter less than the average diameter of the particles of blood-like type.

6. Device for the fractionation of a fluid according to any one of the preceding claims, **characterised in that** said extraction means comprise a first piston (41) moving between the inner wall of said reservoir and said partition, to recover said rich volume, and a second piston (42) moving in the space delimited by said partition, to recover said lean volume, said first and second pistons moving from an initial position in a direction from said first end (21) toward a second end (23) of said reservoir, called direction of pumping or direction of flow, to create vortices in said recirculation zone situated at the outlet of said first passage (29).

7. Device for the fractionation of a fluid according to claim 6, **characterised in that** said first (41) and second pistons (42) are made of a single part.

8. Device for the fractionation of a fluid according to claim 6, **characterised in that** the movement of said second piston (42) is integral with that of said first piston (41) in a direction from said first end (21) toward said second end (23) of said reservoir, said second piston (42) being able to be separated from said first piston and moved independently of said first piston (41) in a direction from said second end toward said first downstream end of said reservoir in order to expulse a potential residual rich volume (*Vᵣₑₛₜ*) present in said reservoir.

9. Device for the fractionation of a fluid according to any one of claims 6 to 8, **characterised in that** the second piston (42) comprises a bellows (53).

10. Device for the fractionation of a fluid according to any one of claims 6 to 9, **characterised in that** the first piston (41) comprises a flange positioned along said partition (31), said flange being able to free successively said orifices (32) as a function of the stroke of said first piston in a direction from said first end (21) toward said second end (23) of said reservoir.

11. Device for the fractionation of a fluid according to any one of claims 6 to 10 **characterised in that** the extraction means (30,40) are removable and intended to be inserted partly into the reservoir in a hollowing out (39) formed in the base (28) of the fractionation body.

12. Device for the fractionation of a fluid according to any one of the preceding claims, **characterised in that** the fractionation body (25) is equipped with a plurality of fins (4,5) fixed on its surface, between its downstream end and its upstream end, each fin extending between the surface of the fractionation body and the inner wall of the reservoir, such that the space separating said inner wall of the reservoir from the fractionation body is split into a plurality of second passages (C), each second passage being delimited by two adjacent fins.

13. Device for the fractionation of a fluid according to claim 12, **characterised in that** two adjacent fins (4,5) delimiting a second passage form, between them, an acute angle (α).

14. Device for the fractionation of a fluid according to claim 12 or 13, **characterised in that** the cross section of a secondary passage (C), transversal to the direction of flow of said fluid, called straight section, is of triangular shape.

15. Device for the fractionation of a fluid according to any one of claims 12 to 14, **characterised in that** the thickness of said fins (4,5) is increasing from said upstream end toward said downstream end of the fractionation body (25) and/or the acute angle (α) formed by said fins forming a fractionation passage (C) is decreasing from said upstream end toward said downstream end of said fractionation body (25).

16. Device for the fractionation of a fluid according to any one of claims 12 to 15, **characterised in that** each fractionation passage (C) is twisted with respect to an axis parallel (Δ) to the direction of flow of said fluid.

17. Use of a device for the fractionation of a fluid according to any one of the preceding claims to fractionate a blood sample (F) between a volume of globule-lean plasma and a volume of globule-rich blood and to recover said volume of plasma.
